# EUROPÄISCHE PATENTSCHRIFT

(11) **EP 2 657 659 B1**
(45) Veröffentlichungstag und Bekanntmachung des Hinweises auf die Patenterteilung: **04.01.2017**
(21) Anmeldenummer: 12002936.8
(22) Anmeldetag: 26.04.2012
(51) Int. Cl.: G01F 1/84, G01F 15/14

(54) **Coriolis-Massendurchflussmessgerät mit hoher Nullpunktstabilität**
Coriolis mass flow measuring device with high zero point stability
Débitmètre massique Coriolis avec une stabilité de point zéro élevée.

(43) Veröffentlichungstag der Anmeldung: 30.10.2013
(73) Patentinhaber: ROTA YOKOGAWA GmbH & Co. KG, 79664 Wehr (DE)
(72) Erfinder: Ricken, Martin, 70713 Bad Säckingen (DE); Amann, Matthias, 79865 Grafenhausen (DE); Reinshaus, Peter, 79790 Küssaberg (DE)
(74) Vertreter: Lang, Friedrich

(56) Entgegenhaltungen:
- EP-A1- 0 601 256
- EP-A1- 1 248 084
- EP-A1- 1 271 111
- WO-A1-2010/138111
- DE-A1-102005 059 070
- DE-A1-102005 062 007
- DE-A1-102006 013 601
- US-A- 4 738 144
- US-A1- 2011 197 681

## Beschreibung

### GEBIET DER ERFINDUNG

Die Erfindung betrifft ein Coriolis-Massendurchflussmessgerät. Insbesondere betrifft sie ein Coriolis-Massendurchflussmessgerät mit einem Paar von gegeneinander schwingenden U-förmigen Messrohren.

### STAND DER TECHNIK

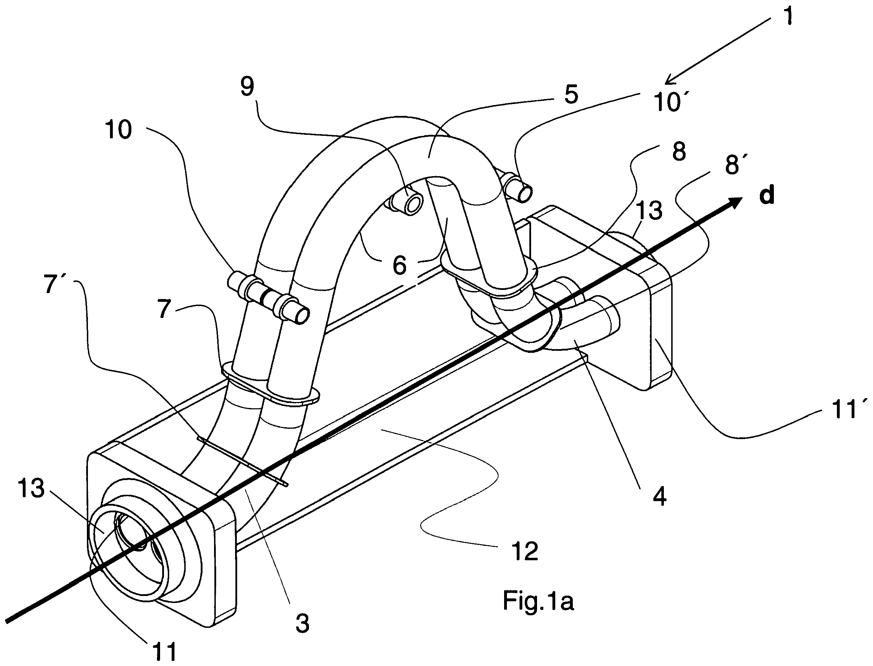

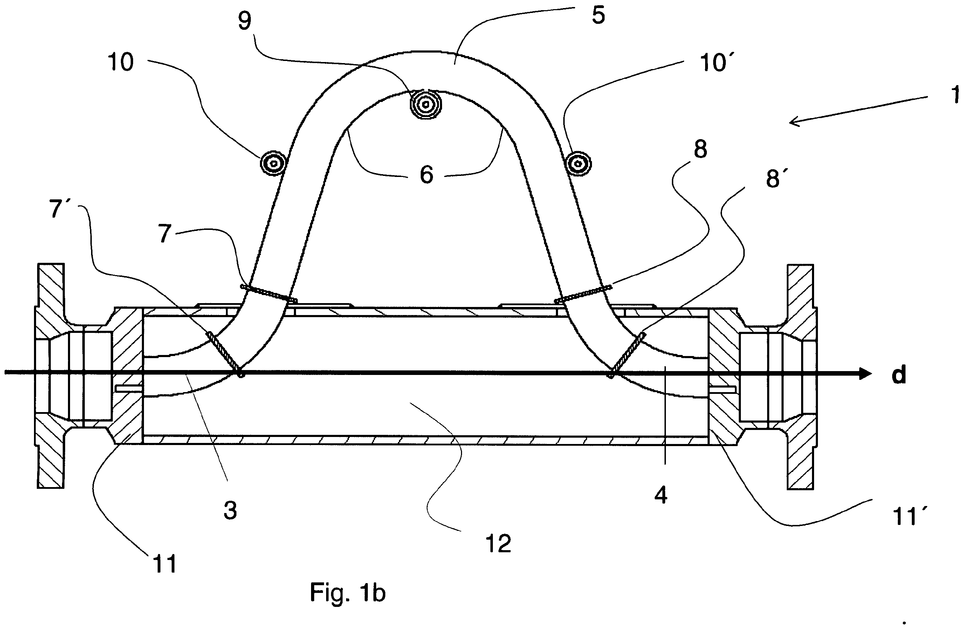

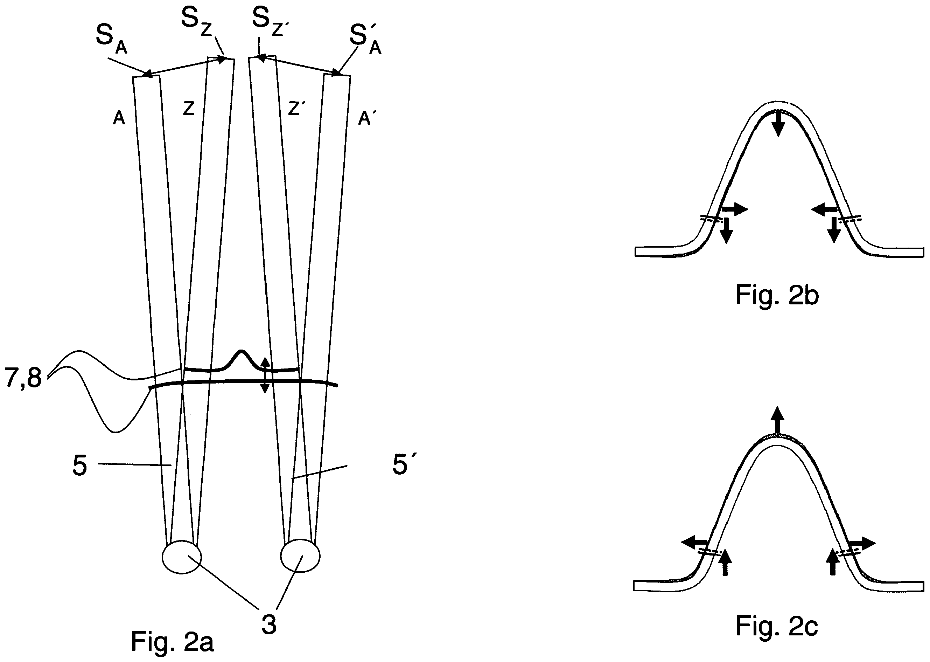

Fig. 1 und 2 zeigen ein Coriolis-Massendurchflussmessgerät gemäß dem Stand der Technik. Darstellung gemäß Fig. 1a ist eine perspektivische Ansicht, Darstellung gemäß Fig. 1b eine schematische Seitenansicht. Das Coriolis-Massendurchflussmessgerät 1 umfasst dabei ein Gehäuse bzw. einen metallischen Rahmen 12, an dessen Enden sich ein Einlass 3 und ein Auslass 4 für ein fluides Medium befinden. In der Nähe des Einlasses 3 und des Auslasses 4 befinden sich Prozessanschlüsse 13, um das Messgerät 1 in eine Prozessleitung einzubauen. Zwischen dem Einlass 3 und dem Auslass 4 befindet sich ein Paar U-förmiger Messrohre 5, die jeweils von einem fluiden Medium durchströmt werden können. Damit beide Messrohre 5 durchströmt werden, ist im vorliegenden Fall nahe des Einlasses 3 bzw. des Auslasses 4 jeweils ein Strömungsteiler 11 vorgesehen. Die Messrohre 5 verfügen jeweils über einen zentralen Bogen 6 und über einen Bereich weiter zum Ende des U-Schenkels, mit denen die beiden U-förmigen Messrohre mit dem Einlass 3 bzw. dem Auslass 4 verbunden sind. In letzterem Bereich sind vorliegend jeweils zwei Knotenbleche 7, 7' und 8, 8' vorgesehen, die die relative Lage der beiden U-förmigen Messrohre zueinander fixieren. Die Durchflussachse für das Medium ist mit d bezeichnet.

Zur Bestimmung eines Massedurchflusses durch das Coriolis-Massendurchflussmessgerät 1 werden die beiden Messrohre 5 mittels eines Schwingungserregers 9 in gegenläufige Schwingung versetzt. Die beiden U-förmigen Messrohre bewegen sich dabei periodisch voneinander fort und erneut aufeinander zu. Dabei werden die Schwingungsbewegungen der Messrohre 5 durch die beiden Schwingungsaufnehmer 10 bzw. 10' detektiert. Fließt keinerlei Fluid durch das Coriolis-Massendurchflussmessgerät 1, so ist die durch die beiden Schwingungsaufnehmer 10 bzw. 10' detektierte Bewegung der Messrohre 5 in Phase zueinander. Fließt hingegen ein fluides Medium durch die Messrohre 5 hindurch, so erfährt das darin fließende Medium durch die Schwingungsbewegung der Messrohre 5 eine Coriolis-Kraft, die im Bereich der Schwingungsaufnehmer 10 bzw. 10' jeweils unterschiedlich gerichtet ist. Aus diesem Grunde kommt es zwischen den mittels der Schwingungsaufnehmer 10 bzw. 10' detektierten Signalen zu einer Phasenverschiebung. Der gemessene Phasenwinkel ist direkt proportional zum Massedurchfluss. Der Elastizitätsmodul des Messrohrmaterials ist temperaturabhängig und geht ebenfalls in den Proportionalitätsfaktor zwischen Phasenwinkel und Massendurchfluss ein. Deshalb wird auch die Temperatur der Messrohre 5 bestimmt und der Phasenwinkel entsprechend kompensiert. Mittels einer geeigneten Signalverarbeitung entsteht aus den gemessenen Signalen ein benutzertaugliches Signal, das Aufschluss über den gesuchten Massendurchfluss gibt.

Die bekannten Coriolis-Massendurchflussmessgeräte werden auch für Medien geringer Dichte (z.B. Gase) oder für Medien sehr hoher Viskosität, das heißt bei sehr niedrigem Massedurchfluss eingesetzt. Außerdem ist der detektierte Phasenwinkel generell eher klein. Damit also auch kleine Massedurchflüsse genau gemessen werden können, ist eine hohe Nullpunktstabilität des Coriolis-Massendurchflussmessgerätes notwendig. Diese wird generell dadurch erreicht, dass die Coriolis-Massendurchflussmessgeräte im Bereich der Prozessanschlüsse möglichst vibrationsfrei sind und somit keine Vibrationsenergie in die sich anschließende Prozessleitung abfließen kann. Werden die Kräfte, die durch die vibrierenden Messrohre in den Knotenblechen erzeugt werden, nicht vollständig kompensiert, dann vibriert umgekehrt das Messgerät insgesamt und erregt damit die anschließende Prozessleitung, so dass es zu Rückkopplungen kommen kann und der Nullpunkt instabil wird. Dies ist vor allem dann ein Problem, wenn in der Prozessleitung selbst oder in angeschlossenen Aufbauten wie z.B. Kesseln eine ähnliche Resonanzfrequenz existiert wie die des Coriolis-Massendurchflussmessgerätes. In diesem Fall treten starke Wechselwirkungen des Gerätes mit der Umgebung auf und der Nullpunkt wird schnell instabil. Dies führt zu Messfehlern.

Um die Nullpunktstabilität bei den bekannten Coriolis-Massendurchflussmessgeräten zu erhöhen, ist es bekannt, Knotenbleche zu verwenden. Diese verbinden die U-förmigen Messrohre in der Nähe der Enden des Schenkels des U so miteinander, dass die relative Lage der Messrohre zueinander fixiert bleibt. Sie haben die Aufgabe, die natürliche Eigenschwingung der Messrohre, die sich bei ruhendem Fluid einstellt, von der auf Coriolis-Kräften beruhenden Schwingung bei strömendem Fluid zu trennen und die Übertragung von Schwingungen zwischen Messrohren und Rohrleitungssystem zu verringern. Entsprechende Lösungsansätze sind aus der EP 1 166 051 B1, der EP 1 985 975 A2 und der WO 2009/050133 A1 bekannt. Dabei werden jeweils zwei Knotenbleche pro Schenkelseite der U-förmigen Messrohre vorgesehen, und die Position der Knotenbleche wird genau festgelegt. Insbesondere in der EP 1 985 975 A2 wird versucht, die Anordnung der Knotenbleche durch FEM (Finite Element Method) abzustimmen und so die Vibrationsamplitude an den Prozessanschlüssen des Gerätes zu minimieren.

Die DE 10 2006 013 601 A1 offenbart ein Coriolis-Massendurchflussmessgerät, ohne einen Hüllbereich um die beiden U-förmigen Messrohre. Der in der Druckschrift offenbarte Messaufnehmer umfasst wenigstens ein mit der Leitung kommunizierendes, insbesondere metallisches Messrohr zum Führen des Mediums, sowie ein das wenigstens eine Messrohr schwenkfähig halterndes Trägerelement. Ein Grundgedanke der Druckschrift ist es nun, die Fixierung von Messrohren eines Messaufnehmers vom Vibrationstyp im Trägerelement mittels möglichst weitgehend vibrationsfester Rohrverschraubungen vorzunehmen. Es wird also eine Verbindung gewählt, die möglichst keine Schwingungen zulassen soll.

Die WO 2010/138111 A1 offenbart ein Coriolis-Massendurchflussmessgerät mit nur einem U-förmigen Messrohr. Ein Problem bei diesen Einzelrohrmessgeräten ist es laut der zitierten Druckschrift, dass sie bei sich verändernden Fluiddichten nicht ausbalanciert sind. Deshalb wird ein sogenanntes Balancierglied vorgeschlagen, das auf bestimmte Art und Weise angeordnet ist.

Es hat sich jedoch gezeigt, dass hinsichtlich der Nullpunktstabilität trotz der bereits existierenden Lösungsansätze noch weiterer Verbesserungsbedarf existiert.

### Beschreibung der Erfindung

Es ist somit die Aufgabe der vorliegenden Erfindung, ein verbessertes Coriolis-Massendurchflussmessgerät bereitzustellen, das über eine stark verbesserte Nullpunktstabilität verfügt. Die Aufgabe wird gelöst durch die Gegenstände der unabhängigen Patentansprüche 1 und 3. Eine vorteilhafte Ausführungsform der Erfindung geht aus dem Unteranspruch hervor.

Im Rahmen der Lösung der gestellten Aufgabe wurde von den Erfindern die Ursache bzw. Ursachen für die auftretenden Vibrationen eingehender analysiert. Betrachtet man noch einmal das Coriolis-Massendurchflussmessgerät gemäß Fig. 1 und 2, so zeigt sich, dass ein kleiner Teil der Biegung der Messrohre 5 über das erste Knotenblech 7 bzw. 8 in die untere Biegung der Messrohre 5 übertragen wird und zu kleinen Bewegungen des Gesamtgerätes 1 bzw. zu kleinen Verbiegungen des metallischen Rahmens 12 bzw. der Prozessanschlüsse führt. Analysiert man die Schwingungsauslenkungen der Messrohre 5 genauer, dann zeigt sich, dass die Schwingungsauslenkungen bei einem Auseinanderschwingen der Messrohre 5 einerseits und dem Zusammenschwingen der Messrohre 5 andererseits nicht vollkommen identisch sind. Es treten nämlich im Bereich der Knotenbleche 7, 8 Zerrungen bzw. Stauchungen auf, was in Figur 2a durch einen Doppelpfeil schematisch veranschaulicht ist. Im ersten Fall des Auseinanderschwingens wird das erste Knotenblech 7 bzw. 8 gezerrt, und das zweite Knotenblech 7' bzw. 8' wird gestaucht. Beim Zunsammenschwingen verhält es sich umgekehrt, das erste Knotenblech 7 bzw. 8 wird gestaucht, und das zweite Knotenblech 7' bzw. 8' wird gestresst. Dieser Zustand ist in Fig. 2a beispielhaft illustriert.

Sind die Knotenbleche im Verhältnis zum Messrohrdurchmesser dünn, dann tritt im Bereich des unteren Bogens, also im Bereich des Endes der U-förmigen Schenkel, jeweils eine zusätzliche Verbiegung des Messrohres auf:
Bei einem Auseinanderschwingen der Messrohre öffnet sich der untere Bogen, und die gesamte Rohrschleife bewegt sich nach unten.
Schwingen die beiden Messrohre zusammen, so schließt sich der untere Bogen, und die gesamte Rohrschleife bewegt sich nach oben.

In Fig. 2a dargestellt ist eine Schnittansicht auf die beiden Messrohre 5 und 5', wobei jeweils unterschiedliche Bewegungszustände A und Z eingezeichnet sind. Verhältnismäßig ortsfest bzw. fix verbleiben die unteren Bereiche der Messrohre 5, 5' während der Schwingung. Die oberen Bereiche hingegen sind maximal ausgelenkt, und die Höhe des zentralen Bogens - angedeutet durch die Positionen der Scheitelpunkte S_{A}, S_{Z}, S_{A}, und S_{Z}, im Zustand A bzw. B - variiert. Anders ausgedrückt kommt es durch den Effekt der ungleichen Biegbewegung des unteren Bogens zu einer Gesamtbewegung der Rohrschleife innerhalb einer Schwingungsperiode, die durch eine Gegenbewegung des Gesamtgehäuses kompensiert werden muss. Das Gerät schwingt also insgesamt, das heißt einschließlich der Prozessanschlüsse, mit der Resonanzfrequenz, was zu den beschriebenen Nullpunktinstabilitäten führen kann. In Fig. 2b ist der beschriebene Schwingvorgang noch einmal in einer Seitenansicht beim Auseinanderschwingen und in Fig. 2c beim Zusammenschwingen dargestellt. Die Pfeile deuten die Bewegungsrichtungen an.

Die vorliegende Erfindung bietet nun mehrere Ansätze, wie die so zustande kommende Nullpunktinstabilität beseitigt werden kann:
Ein erstes Beispiel, das nicht Teil der Erfindung ist, bezieht sich auf ein Coriolis-Massendurchflussmessgerät mit einem Gehäuse mit einem Einlass und mit einem Auslass für ein fluides Medium, die entlang einer Durchflussachse angeordnet sind. Ein fluides Medium kann dabei beispielsweise ein Gas oder eine Flüssigkeit sein. Das Gehäuse kann ein- oder mehrteilig und insbesondere metallisch ausgebildet sein. Des Weiteren verfügt das Coriolis-Massendurchflussmessgerät über ein Paar U-förmige Messrohre, die von dem fluiden Medium durchströmt werden können und die zwischen dem Einlass und dem Auslass angeordnet sind. Dabei verfügen die Messrohre über einen im Wesentlichen zentralen Bogen, an den jeweils Schenkelbereiche des U-förmigen Messrohres angrenzen. Im Bereich der Enden sind die Messrohre also so gekrümmt, dass sie an den Strömungsteiler angeschlossen werden können, wobei dieser Anschluss im Wesentlichen entlang der Durchflussachsrichtung erfolgt. Die Messrohre spannen dabei jeweils eine Ebene E auf und sind im Wesentlichen identisch ausgebildet.

Das Coriolis-Massendurchflussmessgerät weist des Weiteren mindestens ein Knotenblech auf, das die beiden U-förmigen Messrohre im Bereich eines Schenkels des U so miteinander verbindet, dass ihre relative Lage zueinander fixiert ist. Das Knotenblech kann dabei in an sich aus dem Stand der Technik bekannter Weise ausgebildet sein. Das Coriolis-Massendurchflussmessgerät verfügt des Weiteren über einen Schwingungserreger an sich bekannter Bauart sowie über zwei Schwingungsaufnehmer zur Detektion der Messrohrbewegungen. Auch diese sind im Prinzip aus dem Stand der Technik bereits bekannt.

Bei dem ersten Beispiel ist es nun so, dass die beiden U-förmigen Messrohre zueinander nicht parallel, sondern um einen vordefinierten Winkel zueinander hin geneigt angeordnet sind, so dass eine Vibrationsunterdrückung im Bereich der Prozessanschlüsse des Gerätes erzielt werden kann. Durch eine entsprechend abgestimmte Neigung der beiden Messrohre zueinander wird die während der Schwingung auftretende Gesamtbewegung der Rohre genau neutralisiert. Die Gesamtschwingung der Messrohre und die schädliche Kompensationsschwingung des Gesamtgehäuses treten nicht mehr auf. Der optimale Winkel der Messrohre zueinander ist dabei abhängig von den Dimensionen der Messrohre, den Biegeradien, der Stärke und dem genauen Ort der Knotenbleche und anderen Dimensionen des Rahmens, der Strömungsteiler etc. des Messgerätes. Der Winkel wird bei Kenntnis der Charakteristika des Coriolis-Massendurchflussmessgerätes vor Montage bzw. Fertigung bestimmt und kann z.B. mithilfe von FEM Modellierungen und/oder Rechnungen gefunden werden. Alternativ ist es möglich, die externen Vibrationen mithilfe eines Vibrationssensors zu ermitteln und entsprechende Rückschlüsse auf die optimale Neigung der Messrohre zueinander zu ziehen.

Um die Orientierung der U-förmigen Messrohre zueinander mathematisch exakter zu fassen, soll noch einmal auf die Darstellung des Coriolis-Massendurchflussmessgerätes aus Fig. 1 zurückgegriffen werden. Die darin angeordneten U-förmigen Messrohre 5 sind parallel zueinander ausgerichtet. Dies bezieht sich auf den Zustand ohne Schwingungsanregung. Dabei liegt jedes der Messrohre 5 im Wesentlichen in einer Ebene. Die beiden Ebenen, in denen die Messrohre liegen bzw. gekrümmt sind, sind dabei parallel zueinander ausgerichtet. Bevorzugt sind die beiden Messrohre im Wesentlichen identisch, sie haben also im Wesentlichen identische Abmessungen und Massen.

Im beschriebenen Beispiel gilt immer noch, dass jedes der beiden U-förmigen Messrohre für sich genommen in einer Ebene liegt. Jedoch sind die beiden Ebenen der U-förmigen Messrohre nicht mehr vollkommen parallel zueinander, stattdessen sind die beiden Ebenen zueinander hin geneigt. Diese Neigung ist eine absichtliche, und sie ist nicht zu verwechseln mit unabsichtlichen Neigungen, die möglicherweise aufgrund von Fertigungstoleranzen bei der Fertigung der Messgeräte auftreten können.

Gemäß einem Beispiel liegt der Neigungswinkel der beiden U-förmigen Messrohre zueinander typisch zwischen 0,2° und 0,4°. Der Neigungswinkel bezeichnet dabei denjenigen Winkel, um den die beiden Ebenen, in denen die beiden U-förmigen Messrohre jeweils liegen, von der zueinander parallelen Lage abweichen. Er wird in einem Zustand ohne Massendurchfluss und ohne Schwingungsanregung bestimmt bzw. definiert.

Dabei sind die Ebenen grundsätzlich aufeinander zu geneigt, d.h. sie konvergieren. Eine Unterscheidung zwischen absichtlichen Winkelstellungen bzw. Abweichungen von der Parallelität der Ebenen und natürlichen Fertigungstoleranzen kann dabei zum Beispiel aufgrund der Untersuchung einer größeren Fertigungscharge von Produkten getroffen werden. Bei einer entsprechenden Mittelwertbildung lässt sich dann feststellen, ob eine Streuung um einen Neigungswinkel 0 herum existiert, mithin Parallelität vorhanden ist, oder ob ein hiervon verschiedener Neigungswert, insbesondere in Form von leicht konvergierender Neigung vorhanden ist. Des Weiteren sind Fertigungstoleranzen kleiner als die absichtliche Neigungswahl gemäß der Erfindung, nämlich deutlich unter 0,1°.

Beispielhaft weist das Coriolis-Massendurchflussmessgerät zwei Strömungsteiler auf, die vor bzw. nach den beiden U-förmigen Messrohren angeordnet sind. Das Vorsehen von zwei Strömungsteilern in der Nähe der Prozessanschlüsse bzw. nahe Einlass und Auslass für das fluide Medium ist grundsätzlich aus dem Stand der Technik bereits bekannt und findet auch bei dem erfindungsgemäßen Coriolis-Massendurchflussmessgerät vorteilhaft Verwendung. Umgekehrt wäre es aber auch möglich, statt der Strömungsteiler eine entsprechende Mehrzahl von Prozessanschlüssen zu verwenden und das jeweilige Messrohr mit dem Fluid zu durchströmen.

Beispielhaft weist das Coriolis-Massendurchflussmessgerät insgesamt vier Knotenbleche auf, wobei jeweils zwei Knotenbleche pro Schenkelseite des U der U-förmigen Messrohre vorgesehen sind. Die Verwendung von insgesamt vier Knotenblechen führt bereits vorab zu einer weitgehenden Unterdrückung von ungewollten Vibrationen im Bereich der Prozessanschlüsse des Gerätes.

Gemäß einem ersten Aspekt der Erfindung bezieht sich diese auf ein Coriolis-Massendurchflussmessgerät mit einem Gehäuse mit einem Einlass und mit einem Auslass für ein fluides Medium, die entlang einer Durchflussachse angeordnet sind. Das Coriolis-Massendurchflussmessgerät verfügt des Weiteren über ein Paar U-förmige Messrohre, die von dem fluiden Medium durchströmt werden können und die zwischen dem Einlass und dem Auslass angeordnet sind. Die beiden Messrohre sind im Wesentlichen identisch ausgebildet und spannen jeweils eine Ebene E auf. Das Gerät verfügt mindestens über ein Knotenblech, das die beiden U-förmigen Messrohre im Bereich eines Schenkels des U so miteinander verbindet, dass ihre relative Lage zueinander fixiert ist. Das Coriolis-Massendurchflussmessgerät verfügt des Weiteren über einen Schwingungserreger und über zwei Schwingungsaufnehmer zur Detektion der Messrohrbewegungen. Bis zu diesem Punkt gilt im Wesentlichen das bereits oben hinsichtlich des Beispiels Ausgeführte.

Kennzeichnend für die erste Lösung im Rahmen der Erfindung ist nun, dass das Gehäuse zusätzlich zu einem Kernbereich, der die Achse umschließt, des Weiteren einen Hüllbereich aufweist, der die beiden U-förmigen Messrohre umhüllt, wobei eine Verbindung zwischen dem Kernbereich und dem Hüllbereich möglichst starr ausgebildet ist. Dabei kann dann der Kernbereich als Federung dienen, aber auch andere Vorrichtungsteile können diese Aufgabe übernehmen. Auf diese Weise kann dann eine Vibrationsunterdrückung im Bereich der Prozessanschlüsse des Gerätes erzielt werden. Diese Lösung zielt also darauf ab, entstandene Schwingungen durch eine geschickte Konstruktion des Coriolis-Massendurchflussmessgerätes so zu kompensieren, dass im Bereich von Einlass und Auslass für das fluide Medium bzw. im Bereich der Prozessanschlüsse möglichst keine Vibration mehr auftritt. Dabei ist der Hüllbereich des Gehäuses steif und bevorzugt aus Metall gefertigt. Der Hüllbereich ist mit einer oberen Platte des Kernbereiches kraftschlüssig verbunden, z.B. aufgeschweißt.

Erfindungsgemäß ist das Gehäuse so ausgebildet, dass eine Federung bzw. Vibrationskompensation durch eine obere Platte des Gehäuses erfolgt.

Erfindungsgemäß ist dabei eine Stärke der oberen Platte des Gehäuses so ausgelegt, dass die Resonanzfrequenz des Gehäuses zwischen 10 und 100 Hz oberhalb der höchsten auftretenden Resonanzfrequenz der U-förmigen Messrohre liegt.

Gemäß einer besonders bevorzugten Ausführungsform der Erfindung liegt die Resonanzfrequenz des Gehäuses etwa 50 Hz oberhalb der höchsten auftretenden Resonanzfrequenz der U-förmigen Messrohre.

Gemäß einem zweiten Aspekt der Erfindung bezieht sich diese auf ein Coriolis-Massendurchflussmessgerät mit einem Gehäuse mit einem Einlass und mit einem Auslass für ein fluides Medium, die entlang einer Achse angeordnet sind. Das Coriolis-Massendurchflussmessgerät verfügt des Weiteren über ein Paar U-förmige Messrohre, die von dem fluiden Medium durchströmt werden können und die zwischen dem Einlass und dem Auslass angeordnet sind. Dabei spannen die beiden U-förmigen Messrohre jeweils eine Ebene E auf. Sie sind im Wesentlichen identisch ausgebildet. Das Gerät verfügt mindestens über ein Knotenblech, das die beiden U-förmigen Messrohre im Bereich eines Schenkels des U so miteinander verbindet, dass ihre relative Lage zueinander fixiert ist. Das Coriolis-Massendurchflussmessgerät verfügt des Weiteren über einen Schwingungserreger und über zwei Schwingungsaufnehmer zur Detektion der Messrohrbewegungen. Bis zu diesem Punkt gilt im Wesentlichen das bereits oben hinsichtlich des Beispiels Ausgeführte.

Kennzeichnend für die zweite Lösung im Rahmen der Erfindung ist nun, dass die Masseverteilungen des Schwingungserregers und/oder der beiden Schwingungsaufnehmer bezüglich der Ebenen, die durch die Messrohre aufgespannt werden, unterschiedlich sind. Dabei ist es bevorzugt so, dass die unterschiedlichen Masseverteilungen an identischer Position des Schwingungserregers und/oder der Schwingungsaufnehmer bezüglich der jeweiligen Ebene realisiert werden. Die Position kann dabei also pro Ebene bzw. Messrohr identisch sein, aber innerhalb der eingenommenen Position/der Positionen unterscheiden sich die Massen und damit die Massenverteilungen. Erfindungsgemäß wird an der Position des Schwingungserregers und/oder des bzw. der Schwingungsaufnehmer bzw. an diesen einfach etwas Zusatzmasse auf das Messrohr aufgebracht, die nicht exakt in der Ebene liegt.

Der zweiten Lösung liegt folgende Überlegung zugrunde: Grundsätzlich bleiben Vibrationen an den Prozessanschlüssen in weiten Bereichen unabhängig von der Masse des Schwingungserregers und der Schwingungsaufnehmer, wenn die Massen von Schwingungserreger und Schwingungsaufnehmern symmetrisch bezüglich der durch die Messrohre aufgespannten Ebenen sind bzw. die Massenverteilungen je Ebene identisch sind. Sind die Massenverteilungen jedoch pro Ebene verschieden, so erzeugen die ungleichen Massenverteilungen kleine Verbiegungen im jeweiligen Messrohr, die sich im allgemeinen Fall als zusätzliche Vibrationen an den Prozessanschlüssen zeigen. Bei besonderer Ausgestaltung der Masseverteilung können aber auch absichtlich zusätzliche Vibrationen generiert werden, um andere Vibrationen zu neutralisieren und damit unschädlich zu machen. Es ist beispielsweise möglich, Zusatzmassen an den Messrohren derart anzubringen, dass eine Zusatzmasse nicht exakt in der Ebene liegt, die jeweils durch das Messrohr aufgespannt wird. Bei entsprechender Wahl der Massen können systematische Rohrverformungen, die zu einer hoch/runter Kompensationsbewegung des Gehäuses führen, damit kompensiert werden. Die dafür notwendige Massenverteilung kann durch Modellrechnungen, z.B. durch FEM, ermittelt werden, oder sie kann experimentell bestimmt werden.

Die verschiedenen bevorzugten Ausführungsformen der Erfindung können ganz oder teilweise miteinander kombiniert werden. Dies gilt auch für Kombinationen der drei unterschiedlichen Lösungsansätze.

Die Erfindung wird noch besser verstanden werden unter Bezugnahme auf die beigefügten Figuren. Dabei zeigen:
- Fig. 1: zeigt ein Coriolis-Massendurchflussmessgerät gemäß des Standes der Technik, wobei Darstellung a) eine perspektivische Ansicht und b) eine schematische Seitenansicht darstellt;
- Fig. 2: illustriert in schematischer Darstellung die auftretenden Verbiegungen des unteren Bogens der Messrohre und die damit einhergehende Gesamtbewegung der Rohrschleife bei Coriolis-Massendurchflussmessgeräten gemäß des Standes der Technik;
- Fig. 3: illustriert die Neigung der U-förmigen Messrohre und den damit verbundenen Effekt der Vibrationsunterdrückung gemäß des Beispiels;
- Fig. 4: zeigt ein erfindungsgemäßes Coriolis-Massendurchflussmessgerät mit einem speziellen Gehäuse zur Vibrationsunterdrückung, wobei Darstellung a) eine perspektivische Ansicht und b) eine schematische Seitenansicht darstellt; und
- Fig. 5: illustriert eine Vibrationsunterdrückung bei einem erfindungsgemäßen Coriolis-Massendurchflussmessgerät mit dem entsprechenden Gehäuse aus Fig. 4.

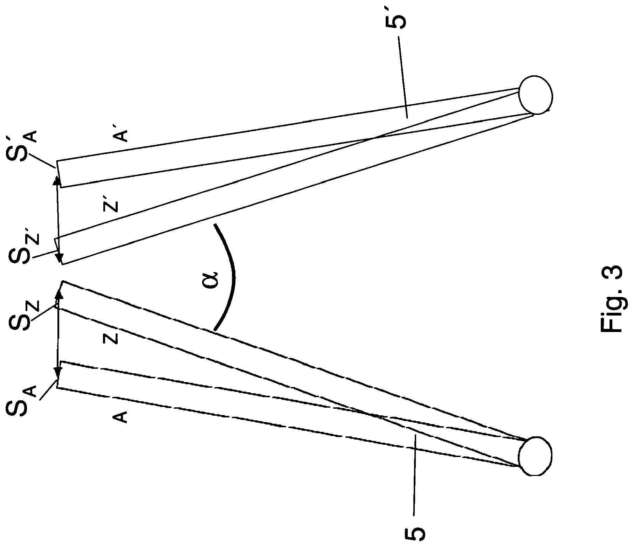

Fig. 3 illustriert eine Vibrationsunterdrückung im Bereich der Prozessanschlüsse eines beispielhaften Coriolis-Massendurchflussmessgerätes basierend auf der vordefinierten Neigung der beiden U-förmigen Messrohre 5 zueinander hin. In Fig. 3 dargestellt sind in schematischer Darstellung in derselben Zeichnung die Position der Messrohre 5 bzw. 5' bei einem Auseinanderschwingen (A) und bei einem Zusammenschwingen (Z) der beiden U-förmigen Messrohre 5 bzw. 5'. Auch hier gilt, dass bei einem Auseinanderschwingen sich der untere Bogen der Messrohre öffnet und sich die gesamte Rohrschleife nach unten bewegt. Entsprechend gilt bei einem Zusammenschwingen, dass sich der untere Bogen schließt und sich die gesamte Rohrschleife nach oben bewegt bzw. sich streckt. Dieser Längenunterschied bzw. Ausdehnungsunterschied resultiert nun aber - anders als bei der Situation in Fig. 2 gemäß dem Stand der Technik - nicht mehr in unterschiedlichen Höhen des Scheitelpunktes S der U-förmigen Messrohre, stattdessen ist die Position des Scheitelpunktes S_{A}, S_{Z} und S_{Z'}, S_{A}, stets in derselben Höhe. Dies ist in Fig. 3 durch die waagerechten Doppelpfeile angedeutet.

Die beiden U-förmigen Messrohre 5 bzw. 5' sind um einen Winkel α zueinander hin geneigt. Dabei verändert sich dieser Neigungswinkel α natürlich während der ausgeführten Schwingung. Als Bezugsgröße soll stets der Neigungswinkel α dienen, der ohne zusätzliche Schwingungserregung der U-förmigen Messrohre 5 bzw. 5' eingestellt ist. Typischerweise liegt der Winkel α im Ruhezustand zwischen 0,2° und 0,4°.

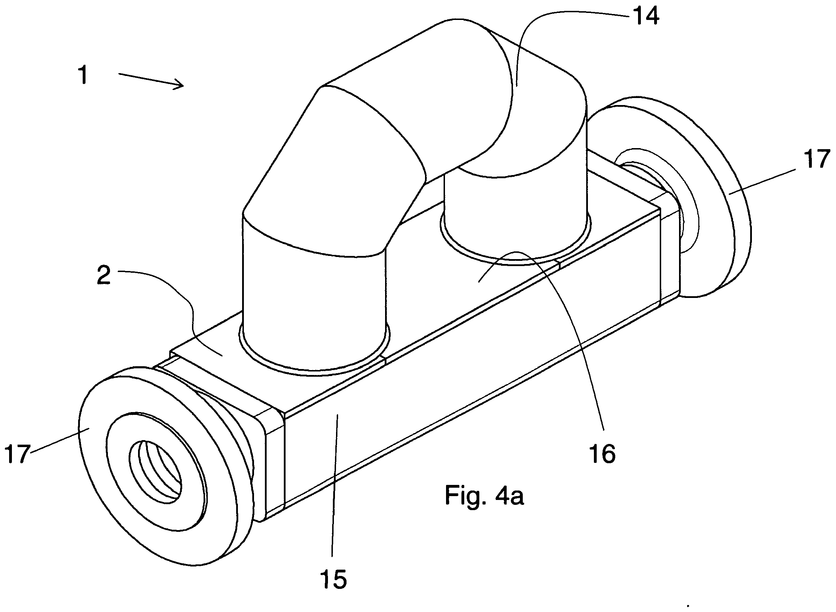

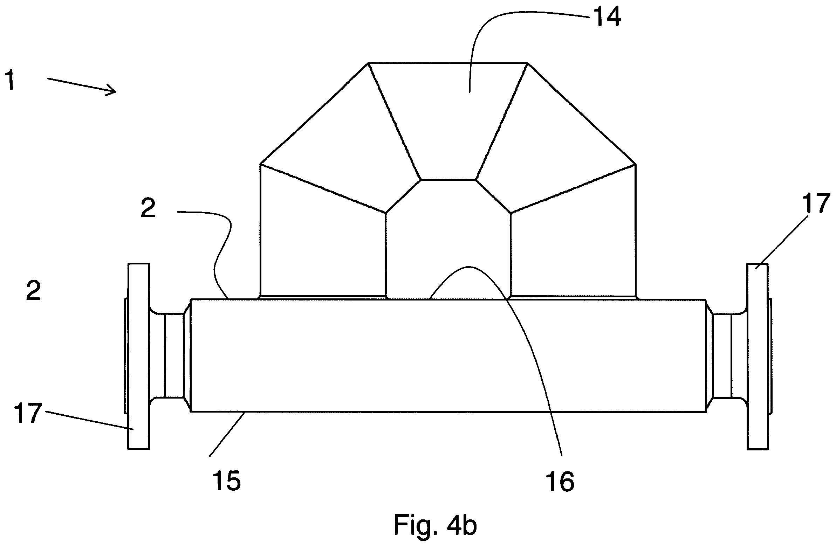

Fig. 4 zeigt ein erfindungsgemäßes Coriolis-Massendurchflussmessgerät 1 mit einem speziellen Gehäuse zur Schwingungsreduktion im Bereich der Prozessanschlüsse. Darstellung a) zeigt eine perspektivische Ansicht, Darstellung b) eine schematische Seitenansicht. Dargestellt ist ein im Wesentlichen quaderförmiges Gehäuse bzw. ein Kernbereich 2, der die Durchflussachse durch das Messgerät umschließt bzw. beinhaltet. Im Bereich dieses Gehäusebereiches 2 befinden sich typischerweise Einlass und Auslass sowie auch jeweils ein Strömungsteiler im Bereich des Einlasses und im Bereich des Auslasses. Zu erkennen ist in Fig. 4 nun wiederum der Hüllbereich 14, welcher starr bzw. steif mit dem Kernbereich 2 verbunden ist. Der Hüllbereich kann beispielsweise metallisch sein. Im vorliegenden Beispiel ist nun der Hüllbereich 14 mit einer oberen Platte 16 des Gehäuses 2 kraftschlüssig verbunden, z.B. aufgeschweißt. Dabei ist die Stärke der oberen Platte 16 so ausgelegt, dass die Resonanzfrequenz des Gehäuses mit der oberen Platte als Feder einige zehn Hertz oberhalb der höchsten Resonanzfrequenz der umhüllten Messrohre liegt. Wählt man so eine Konstruktion, dann schwingt im Fall einer Ungleichheit der Messrohre die Haube als Gegenschwinger gegen die Paarbewegung der Rohre. Die Prozessanschlüsse 17 bleiben dabei sehr viel ruhiger als in dem Fall, dass das Gehäuse bzw. der Hüllbereich 14 starr über die obere Platte 16 mit den Strömungsteilern verbunden wäre.

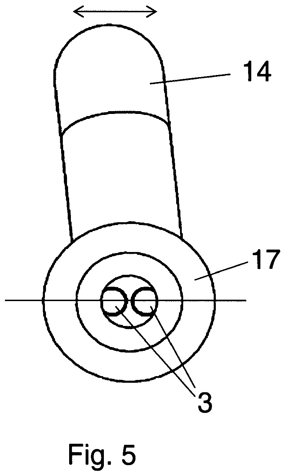

Fig. 5 illustriert den Vibratiohsunterdrückungseffekt bei der Verwendung des in Fig. 4 dargestellten Gerätes. Für Illustrationszwecke wurde ein Messrohr mit einem Gewicht in der Nähe des Erregers bewusst ungleich zum anderen Messrohr ausgestaltet, so dass naturgemäß - ohne das erfindungsgemäße Gehäuse - starke Vibrationen im Bereich der Prozessanschlüsse auftreten würden. Vorliegend liegt die Resonanzfrequenz des Gehäuses mit der oberen Platte als Feder ca. 50 Hz oberhalb der Rohrresonanzfrequenz. Bei erheblicher Vergrößerung des Effektes sieht man - wie schematisch in Fig. 5 dargestellt - dass das Gehäuse um eine Achse etwas oberhalb der Durchflussachse gemäß Doppelpfeil schwingt und der Prozessanschluss keine sichtbaren Drehbewegungen ausführt.

Mithilfe der Erfindung ist es möglich geworden, ein Coriolis-Massendurchflussmessgerät bereitzustellen, das über eine verbesserte Nullpunktstabilität verfügt. Dies lässt sich durch die Verwendung eines verbesserten Gehäuses für das Coriolis-Massendurchflussmessgerät sowie durch eine aktive Vibrationsverursachung aufgrund spezieller Massenverteilungen an Schwingungserreger und/oder Schwingungsaufnehmern zur Neutralisierung von störenden Vibrationen realisieren.

## Patentansprüche

1. Coriolis-Massendurchflussmessgerät (1), das folgendes aufweist:
- Prozessanschlüsse (17) für ein fluides Medium,
- ein Gehäuse (2) mit einem Einlass (3) und mit einem Auslass (4) für das fluide Medium, die entlang einer Achse (d) angeordnet sind;
- ein Paar U-förmige Messrohre (5), die von dem fluiden Medium durchströmt werden können und die zwischen dem Einlass (3) und dem Auslass (4) angeordnet sind, wobei jedes der Messrohre (5) eine Ebene (E) aufspannt;
- mindestens ein Knotenblech (7, 8), das die beiden U-förmigen Messrohre (5) im Bereich eines Schenkels des U so miteinander verbindet, dass ihre relative Lage zueinander fixiert ist;
- einen Schwingungserreger (9); und
- zwei Schwingungsaufnehmer (10) zur Detektion der Messrohrbewegungen,
wobei das Gehäuse (2) einen Kernbereich (15) aufweist, der die Achse (d)
umschließt, und
wobei der Kernbereich (15) des Gehäuses (2) eine obere Platte (16) aufweist,
**dadurch gekennzeichnet, dass**
das Gehäuse (2) des Weiteren einen Hüllbereich (14) aufweist, der die beiden U-förmigen Messrohre (5) umhüllt,
wobei die Verbindung zwischen der oberen Platte (16) und dem Hüllbereich (14) kraftschlüssig ausgebildet ist und
wobei die Stärke der oberen Platte (16) so ausgelegt ist, dass die Resonanzfrequenz des Gehäuses (2) zwischen 10 und 100 Hz oberhalb der höchsten auftretenden Resonanzfrequenz der U-förmigen Messrohre (5) liegt,
so dass eine Vibrationskompensation durch die obere Platte (16) des Kernbereichs (15) erfolgt, was zur Vibrationskompensation im Bereich der Prozessanschlüsse (17) führt.

2. Coriolis-Massendurchflussmessgerät (1) gemäß dem vorangehenden Anspruch, wobei die Resonanzfrequenz des Gehäuses (2) etwa 50 Hz oberhalb der höchsten auftretenden Resonanzfrequenz der U-förmigen Messrohre (5) liegt.

3. Coriolis-Massendurchflussmessgerät (1), das Folgendes aufweist:
- Prozessanschlüsse (17) für ein fluides Medium,
- ein Gehäuse (2) mit einem Einlass (3) und mit einem Auslass (4) für das fluide Medium, die entlang einer Achse (d) angeordnet sind;
- ein Paar U-förmige Messrohre (5, 5'), die von dem fluiden Medium durchströmt werden können und die zwischen dem Einlass (3) und dem Auslass (4) angeordnet sind, wobei jedes der Messrohre (5, 5') eine Ebene (E, E') aufspannt;
- mindestens ein Knotenblech (7, 8), das die beiden U-förmigen Messrohre (5) im Bereich eines Schenkels des U so miteinander verbindet, dass ihre relative Lage zueinander fixiert ist;
- einen Schwingungserreger (9); und
- zwei Schwingungsaufnehmer (10) zur Detektion der Messrohrbewegungen,
**dadurch gekennzeichnet, dass**
an der Position des Schwingungserregers (9) und/ oder des bzw. der Schwingungsaufnehmer (10) bzw. an diesen etwas Zusatzmasse auf das Messrohr (5, 5') aufgebracht ist, derart dass unterschiedliche Masseverteilungen bezüglich der jeweiligen Ebenen (E, E') realisiert werden, so dass eine Vibrationskompensation im Bereich der Prozessanschlüsse (17) des Gerätes (1) erzielt werden kann.

## Claims

1. A Coriolis mass flow meter (1), comprising:
- process connectors (17) for a fluid medium,
- a housing (2) having an inlet (3) and an outlet (4) for the fluid medium, which are disposed along an axis (d);
- a pair of U-shaped measuring tubes (5) through which the fluid medium can flow and which are disposed between the inlet (3) and the outlet (4), each of the measuring tubes (5) spanning a plane (E);
- at least one gusset plate (7, 8), which connects the two U-shaped measuring tubes (5) to each other in the region of a leg of the U such that their position relative to each other is fixed;
- a vibration exciter (9); and
- two vibration sensors (10) for the detection of the measuring tube movements, the housing (2) comprising a core region (15) which surrounds the axis (d), and
the core region (15) of the housing (2) having an upper plate (16),
**characterized in that**
the housing (2) further comprises an envelope region (14), which envelops the two U-shaped measuring tubes (5),
the connection between the upper plate (16) and the envelope region (14) being configured in a force-locking manner, and
the thickness of the upper plate (16) being such that the resonance frequency of the housing (2) is between 10 and 100 Hz above the highest occurring resonance frequency of the U-shaped measuring tubes (5),
so that a vibration compensation is achieved by the upper plate (16) of the core region (15), which results in a vibration compensation in the region of the process connectors (17).

2. The Coriolis mass flow meter (1) according to the preceding claim, wherein the resonance frequency of the housing (2) is approximately 50 Hz above the highest occurring resonance frequency of the U-shaped measuring tubes (5).

3. A Coriolis mass flow meter (1), comprising:
- process connectors (17) for a fluid medium,
- a housing (2) having an inlet (3) and an outlet (4) for the fluid medium, which are disposed along an axis (d);
- a pair of U-shaped measuring tubes (5, 5') through which the fluid medium can flow and which are disposed between the inlet (3) and the outlet (4), each of the measuring tubes (5, 5') spanning a plane (E, E');
- at least one gusset plate (7, 8), which connects the two U-shaped measuring tubes (5) to each other in the region of a leg of the U such that their position relative to each other is fixed;
- a vibration exciter (9); and
- two vibration sensors (10) for the detection of the measuring tube movements, **characterized in that**
at the position of the vibration exciter (9) and/or the vibration sensor or vibration sensors (10), or thereon, some additional mass is applied onto the measuring tube (5, 5') such that different mass distributions are realized with respect to the respective planes (E, E'), so that a vibration compensation can be achieved in the region of the process connectors of the device (1).

## Revendications

1. Débitmètre massique à effet Coriolis (1), comprenant:
- des raccords process (17) pour un milieu fluide,
- un boîtier (2) ayant une entrée (3) et une sortie (4) pour le milieu fluide qui sont disposées le long d'un axe (d);
- une paire de tubes de mesure conformés en U (5) dans lesquels le milieu fluide peut circuler et qui sont disposés entre l'entrée (3) et la sortie (4), chacun des tubes de mesure (5) s'étendant sur un plan (E);
- au moins un gousset (7, 8) qui raccorde l'un à l'autre les deux tubes de mesure conformés en U (5) dans la zone d'une branche du U de telle sorte que leur position l'un par rapport à l'autre soit fixe;
- un générateur de vibrations (9); et
- deux détecteurs de vibrations (10) pour la détection des mouvements des tubes de mesure, le boîtier (2) comprenant une zone centrale (15) qui entoure l'axe (d), et la zone centrale (15) du boîtier (2) comprenant une plaque supérieure (16),
**caractérisé en ce que**
le boîtier (2) comprend en outre une zone d'enveloppe (14) qui entoure les deux tubes de mesure conformés en U (5),
le raccordement entre la plaque supérieure (16) et la zone d'enveloppe (14) étant réalisé en force, et
l'épaisseur de la plaque supérieure (16) étant telle que la fréquence de résonance du boîtier (2) est de 10 à 100 Hz supérieure à la plus haute fréquence de résonance des tubes de mesure conformés en U (5) se produisant,
de telle sorte qu'une compensation des vibrations est réalisée par la plaque supérieure (16) de la zone centrale (15), qui a pour résultat une compensation des vibrations dans la zone des raccords process (17).

2. Débitmètre massique à effet Coriolis (1) selon la revendication précédente, dans lequel la fréquence de résonance du boîtier (2) est approximativement 50 Hz supérieure à la plus haute fréquence de résonance des tubes de mesure conformés en U (5) se produisant.

3. Débitmètre massique à effet Coriolis (1), comprenant:
- des raccords process (17) pour un milieu fluide,
- un boîtier (2) ayant une entrée (3) et une sortie (4) pour le milieu fluide qui sont disposées le long d'un axe (d);
- une paire de tubes de mesure conformés en U (5, 5'), dans lesquels le milieu fluide peut circuler et qui sont disposés entre l'entrée (3) et la sortie (4), chacun des tubes de mesure (5, 5') s'étendant sur un plan (E, E');
- au moins un gousset (7, 8) qui raccorde l'un à l'autre les deux tubes de mesure conformés en U (5, 5') dans la zone d'une branche du U de telle sorte que leur position l'un par rapport à l'autre soit fixe;
- un générateur de vibrations (9); et
- deux détecteurs de vibrations (10) pour la détection des mouvements des tubes de mesure,
**caractérisé en ce que**
au niveau de la position du générateur de vibrations (9) et/ou du détecteur de vibrations ou des détecteurs de vibrations (10), ou sur ceux-ci, une masse supplémentaire est appliquée sur le tube de mesure (5, 5') de telle sorte que des distributions de masse différentes soient obtenues par rapport aux plans respectifs (E, E') de telle sorte que la compensation des vibrations puisse être réalisée dans la zone des raccords process du dispositif (1).
